# FASCICULE DE BREVET EUROPEEN

(11) **EP 1 410 578 B1**
(45) Date de publication et mention de la délivrance du brevet: **26.10.2005**
(21) Numéro de dépôt: 02764954.0
(22) Date de dépôt: 09.07.2002
(51) Int. Cl.: H04L 12/46

(54) **PROCEDE POUR LE FONCTIONNEMENT SIMULTANE D'AU MOINS DEUX TUNNELS SUR AU MOINS UN RESEAU**
VERFAHREN ZUM GLEICHZEITIGEN BETRIEB VON MINDESTENS ZWEI TUNNELN IN MINDESTENS EINEM NETZWERK
METHOD FOR SIMULTANEOUSLY OPERATING AT LEAST TWO TUNNELS ON AT LEAST A NETWORK

(30) Priorité: 23.07.2001 FR 0110043
(43) Date de publication de la demande: 21.04.2004
(73) Titulaire: 6Wind, 78180 Montigny le Bretonneux (FR)
(72) Inventeur: KSINANT, Vladimir, F-92130 Issy-les-Moulineaux (FR); GUERIN, Jean-Mickael, F-92130 Issy-les-Moulineaux (FR)
(74) Mandataire: de Saint-Palais, Arnaud Marie
(86) Numéro de dépôt international: PCT/FR2002/002398
(87) Numéro de publication internationale: WO 2003/010928

(56) Documents cités:
- EP-A- 1 035 688
- US-A- 6 115 750

## Description

La présente invention a pour objet un procédé et un système permettant un fonctionnement simultané de multiples tunnels dans lesquels des données sont transmises sous forme de paquets répondant à un premier protocole et enfermés à l'intérieur de paquets créés sous au moins un second protocole.

Elle concerne notamment les messages circulant sur les réseaux IP qui utilisent le protocole Internet et qui sont constitués de paquets IP.

D'une façon générale, on sait que l'utilisation de tunnels ou "tunnelling" est une technique utilisée dans un grand nombre de nouvelles fonctions associées aux réseaux. Cette technique consiste notamment à :
- faire subir éventuellement une transformation réversible au paquet d'origine, puis à
- encapsuler le paquet (éventuellement transformé) soit à la source du paquet, soit au niveau d'un noeud intermédiaire du réseau.

Les informations concernant les opérations (fragmentations, encapsulations) subies par le paquet constituent le contexte. En plus des différents fragments, le contexte est nécessaire pour reformer correctement le paquet tel qu'il avait été émis par sa source.

Les tunnels sont désormais utilisés dans les technologies Internet pour assurer notamment les fonctions suivantes :
- la sécurité qui consiste à chiffrer les paquets pour assurer la confidentialité des données,
- la migration IPv4/IPv6 qui consiste à permettre l'accès aux versions v4 et v6 des réseaux IP,
- l'émulation de réseaux privés.

Les brevets EP-A-1 035 688 et US-A-6 115 750 décrivent des solutions dans lesquelles les paquets IP sont encapsulés dans des tunnels simples et uniques.

Bien entendu, cette liste n'est pas limitative et il est probable que de nouvelles utilisations apparaîtront dans le futur, étant entendu que différents types de tunnels coexistent déjà sur Internet. Toutefois; si les standards fournissent une bonne définition de chaque fonction prise séparément, en revanche, ils ne décrivent pas l'interaction des différentes fonctions au sein d'une même machine réseau.

Par ailleurs, il s'avère qu'il est parfois difficile de réaliser simultanément plusieurs fonctions si ces fonctions s'appuient sur la notion de "tunnelling". En effet, les tunnels utilisés simultanément se retrouvent superposés. Le paquet est alors encapsulé à l'entrée de chaque tunnel.

Les traitements appliqués dans un noeud intermédiaire du réseau dépendent d'informations lues dans l'en-tête du paquet. Lorsque le paquet d'origine a traversé un ou plusieurs tunnels, le nouveau paquet possède plusieurs en-têtes de tunnels. Il se pose alors la question de savoir sur quel en-tête le traitement doit s'appuyer.

Le "tunnelling" pose également un problème de longueur de paquet. En effet, les paquets ont toujours une taille maximale qui dépend de la technologie de la liaison sous-jacente. La taille maximale du paquet est nommée MTU ("Maximum Transfer Unit"). Chaque tunnel rajoute un en-tête au paquet et modifie donc sa taille. Si cette taille devient plus grande que le MTU (unité de transmission maximum), alors il devient nécessaire de fragmenter à nouveau le paquet en émission et de ré-assembler en réception.

L'invention a plus particulièrement pour but un procédé permettant de faire fonctionner simultanément plusieurs fonctions qui s'appuient sur la notion de "tunnelling" et ce, en dépit des contraintes précédemment évoquées que présente cette technique.

A cet effet, lorsqu'un noeud intermédiaire du réseau (qui est une machine réseau) doit effectuer un (ou des) traitement(s) correspondant à une (ou plusieurs) fonction(s), l'invention propose d'effectuer ces traitements sur le paquet original tel qu'il avait été émis par la source et non pas sur le paquet (ou ses fragments) reçu(s) par le noeud après passage dans divers tunnels.

En conséquence, elle propose un procédé permettant un fonctionnement simultané d'une pluralité de tunnels sur au moins un réseau comprenant au moins un noeud intermédiaire devant effectuer au moins un traitement correspondant à au moins une fonction, et dans lequel des données sont transmises par une station hôte sous forme de paquets répondant à un premier protocole et enfermés à l'intérieur de paquets créés sous au moins un deuxième protocole.

Selon l'invention, ce procédé est caractérisé en ce que ledit traitement est effectué sur le paquet original tel qu'il avait été émis par la station hôte source du paquet et non sur le paquet (ou ses fragments) reçu par le noeud après passage dans divers tunnels, et en ce qu'en conséquence il comprend au niveau du noeud intermédiaire, une séquence opératoire comportant :
- l'extraction de tous les en-têtes de tunnel du paquet original et si nécessaire le ré-assemblage du paquet original à partir de ses fragments, dans le cas où le paquet original a préalablement subi une fragmentation,
- l'exécution dudit traitement associé à ladite fonction sur le paquet original,
- la refragmentation éventuelle du paquet ayant subi les traitements et la remise en place des en-têtes des tunnels.

Eventuellement, le procédé précédemment défini pourra comprendre, lors de la phase d'extraction et de ré-assemblage, une phase de stockage de contextes incluant les informations concernant les opérations (fragmentations, encapsulations) subies par le paquet. Ces informations pourront être ensuite utilisées dans la phase de refragmentation et de remise en place des en-têtes de tunnels.

Ce procédé est récursif. Il s'applique non seulement aux noeuds intermédiaires du réseau mais aussi à la station hôte, source du paquet.

Un avantage important de ce procédé consiste en ce qu'il n'y a pas de contrainte sur les traitements effectués sur le paquet original.

A titre d'exemple, ces traitements peuvent consister en la réalisation d'un nouveau tunnel et/ou en des opérations de différenciation de paquets en vue d'assurer une qualité de service. Ils peuvent être en outre associés à d'autres types de fonctions.

Bien entendu, l'invention peut être implémentée de manière logicielle et/ou matérielle.

Un mode d'exécution de l'invention sera décrit ci-après, à titre d'exemple non limitatif, avec référence aux dessins annexés dans lesquels :
La figure 1 est une représentation schématique illustrant la technique de "tunnelling" comprenant la transformation réversible optionnelle et l'encapsulation de l'ensemble d'un paquet ;
La figure 2 est une représentation schématique d'une transmission d'un paquet avec traversée de trois tunnels ;
La figure 3 montre la structure d'un paquet obtenu après la traversée de trois tunnels simultanés selon un processus classique ;
La figure 4 est un algorithme de mise en oeuvre du procédé selon l'invention ;
Les figures 5 et 6 montrent deux exemples dans lesquels des tunnels sont établis, soit depuis une station hôte, soit au niveau de noeuds de réseau.

Comme précédemment mentionné, les messages circulant sur les réseaux, notamment les réseaux IP ("Internet Protocol"), sont constitués de paquets.

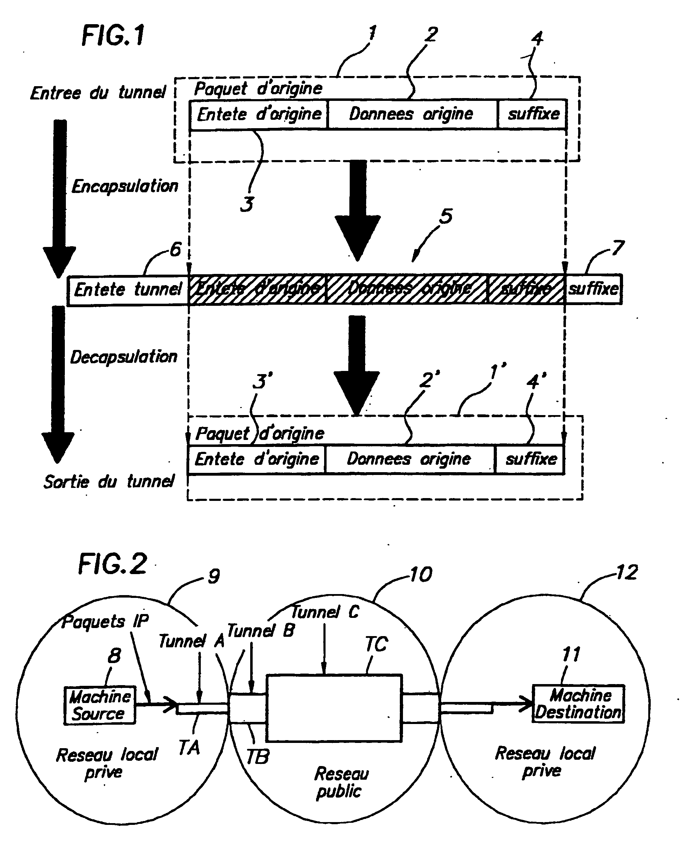

Comme illustré sur la figure 1, à l'origine, chacun des paquets 1 se compose de données d'origine 2 précédées d'un en-tête d'origine 3 et d'un suffixe 4.

A l'entrée d'un tunnel, ce paquet d'origine 1 subit une encapsulation, c'est-à-dire un processus réversible selon lequel le paquet 1, dans son intégralité, après avoir éventuellement subi une transformation réversible optionnelle, est inclus dans un nouveau paquet 5 doté d'un nouvel en-tête (en-tête tunnel 6) et, si nécessaire, d'un nouveau suffixe (suffixe tunnel 7).

Compte tenu du caractère réversible de l'encapsulation, le paquet encapsulé 5 peut subir une transformation inverse de décapsulation pour sortir du tunnel et restituer le paquet d'origine 1' (en-tête d'origine 3' - données d'origine 2' - suffixes 4'). Cette transformation comprend l'extraction de la capsule constituée de l'en-tête tunnel 6 et de l'éventuel suffixe tunnel 7.

La figure 2 illustre un exemple où un paquet IP émis par une machine source 8 d'un réseau local privé 9 traverse trois tunnels TA, TB, TC, transite par un réseau public 10 avant de parvenir à la machine destinatrice 11 d'un deuxième réseau local public 12.

A titre d'exemple, le premier tunnel TA pourrait consister en un tunnel de chiffrement, le tunnel TB est prévu de manière à traverser le réseau public 10 qui est de nature différente du réseau 9, et le tunnel TC est un tunnel de migration IPv4/IPv6.

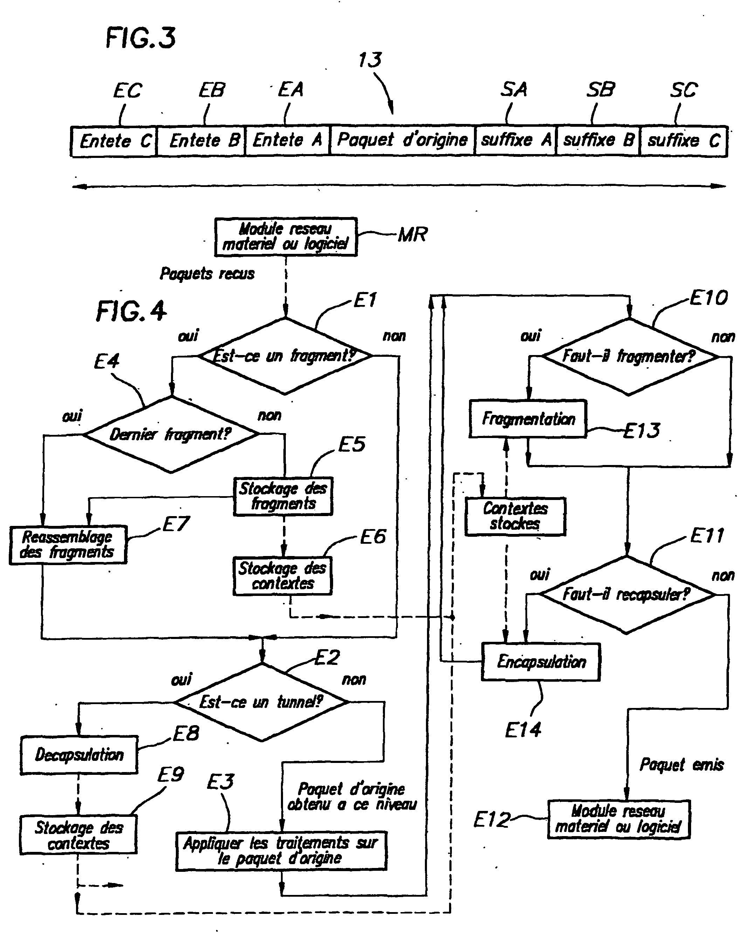

La figure 3 montre le paquet 13 ayant traversé simultanément les trois tunnels TA, TB et TC et donc trois encapsulations successives. Ce paquet comprend le paquet d'origine précédé de trois en-têtes successifs, à savoir, en partant du centre : l'en-tête EA, l'en-tête EB et l'en-tête EC et trois suffixes successifs, à savoir : le suffixe SA, le suffixe SB et le suffixe SC.

Bien entendu, cet exemple n'est pas limitatif étant entendu que de nombreuses autres fonctions pourraient être associées aux tunnels et pourraient être utilisées de la même façon.

Comme précédemment mentionné, les traitements appliqués dans un noeud intermédiaire du réseau public dépendent d'informations lues dans l'en-tête du paquet. Or, dans le cas d'espèce, le paquet d'origine 14 a déjà traversé trois tunnels et comprend trois en-têtes EA, EB, EC en plus de l'en-tête d'origine. Le problème se pose donc de savoir sur quel en-tête le traitement doit s'effectuer.

L'invention propose d'effectuer ces traitements non pas sur le paquet 13 (ou ses fragments) reçu(s) par le noeud intermédiaire après passage dans divers tunnels, mais sur le paquet original 14 tel qu'il a été émis par la source.

Cette solution implique les opérations successives de décapsulage, de ré-assemblage éventuel, de traitement, de refragmentation éventuelle, et de ré-encapsulation.

Ce processus peut être exécuté grâce à un module réseau MR matériel ou logiciel selon l'algorithme représenté sur la figure 4 dans lequel :

Chaque paquet reçu par le module réseau MR est analysé de manière à déterminer s'il s'agit d'un fragment de paquet d'origine ou d'un paquet non fragmenté (étape E₁).

S'il s'agit d'un paquet non fragmenté, le module détecte (étape E₂) si ce paquet est un tunnel ou non.

Si ce paquet n'est pas un tunnel, il s'agit donc d'un paquet d'origine. En conséquence, on applique les traitements à ce paquet d'origine (étape E₃).

Dans le cas où à l'étape E₁ le module détecte un fragment de paquet, il détermine alors si ce fragment est le dernier fragment d'un paquet (étape E₄), dans ce cas, s'il ne s'agit pas du dernier fragment, le module procède au stockage en mémoire du fragment (étape E₅) ainsi que le stockage du contexte relatif à ce fragment (étape E₆).

Dans le cas où il s'agit d'un dernier fragment, le module procède au ré-assemblage des fragments précédemment stockés en mémoire (étape E₇) pour obtenir un paquet. Le module passe alors à l'étape E₂ pour déterminer si ce paquet est un tunnel ou non.

Si, à l'étape E₂, le module détecte un tunnel, il procède à une décapsulation de ce tunnel (étape E₈) et effectue un stockage en mémoire du contexte relatif à ce tunnel (étape E₉). Le paquet obtenu après cette décapsulation est renvoyé à l'étape E₁ de détection des fragments avant d'effectuer un nouveau cycle.

Bien entendu, dans le cas où à l'étape E₂ le module ne détecte pas un tunnel, il s'agit d'un paquet d'origine et le module applique sur ce paquet des traitements, par exemple des traitements réversibles optionnels (étape E₃).

Le module détermine ensuite si le paquet d'origine sur lequel ont été appliqués les traitements doit être fragmenté ou non (étape E₁₀). Cette détermination prend en compte les contextes stockés dans les étapes E₆ et E₉.

Si le paquet ne doit pas être fragmenté, le module détermine s'il doit être recapsulé ou non (étape E₁₁). Dans la négative, le paquet peut être émis sur le réseau sur lequel se trouve le module (étape E₁₂).

Dans le cas où, à l'étape E₁₀, le module détermine que le paquet doit être fragmenté, il procède à la fragmentation de ce paquet (étape E₁₃) en tenant compte des contextes stockés aux étapes E₆ et E₉ et détermine à l'étape E₁₁ si les fragments doivent être recapsulés ou non.

Dans le cas où, à l'étape E₁₁, le module détermine que le paquet (ou le fragment) doit être recapsulé, il procède à une encapsultation (étape E₁₄) avant de déterminer si le paquet recapsulé doit être fragmenté ou non (étape E₁₀).

Il convient de noter que, dans ce qui précède, le terme "contexte" concerne les informations relatives aux opérations (fragmentations, encapsulations) subies par un paquet. En plus des différents fragments, le contexte est nécessaire pour reformer exactement le paquet tel qu'il avait été émis par sa source.

Par ailleurs, les capsules et contextes stockés dans les étapes E₆, E₉ lorsque les paquets sont décapsulés avant d'être traités, contiennent notamment les en-têtes et les suffixes des paquets ainsi que la longueur des fragments reçus.

Un avantage important du procédé précédemment décrit consiste en ce qu'il permet l'utilisation simultanée et l'interfonctionnement de fonctions mettant en oeuvre des tunnels. Ces fonctions peuvent être réalisées dans des routeurs ou dans des stations hôtes.

Grâce à ce procédé, l'interfonctionnement de fonctions s'appuyant sur des tunnels est garanti puisque chaque fonction traite le paquet original comme si elle était seule, c'est-à-dire indépendamment des autres fonctions.

Ainsi, ce procédé peut permettre, par exemple, d'utiliser simultanément les fonctions suivantes :
- la sécurité IPSEC, qui consiste à chiffrer les paquets pour assurer la confidentialité des données,
- la migration IPv4/IPv6, qui consiste à permettre l'accès aux versions v4 et v6 des réseaux IP,
- la qualité de service (QoS) qui consiste à différencier et à réguler les paquets IP pour optimiser le trafic réseau.

Bien entendu, le procédé selon l'invention peut être étendu à toute fonction à base de tunnel. Il s'applique notamment à l'établissement de réseaux privés virtuels non sécurisés. Dans ce cas, il s'agit d'émuler un réseau local (LAN) qui ne couvre qu'une surface restreinte à travers une liaison avec un réseau global WAN ayant une grande extension et disposant de connexions par exemple téléphoniques avec le réseau local (LAN), comme on le fait à l'heure actuelle.

Une autre particularité du procédé selon l'invention consiste en ce que les extrémités de chaque tunnel peuvent être différentes, ce qui n'était pas possible dans les procédés de "tunnelling" actuels.

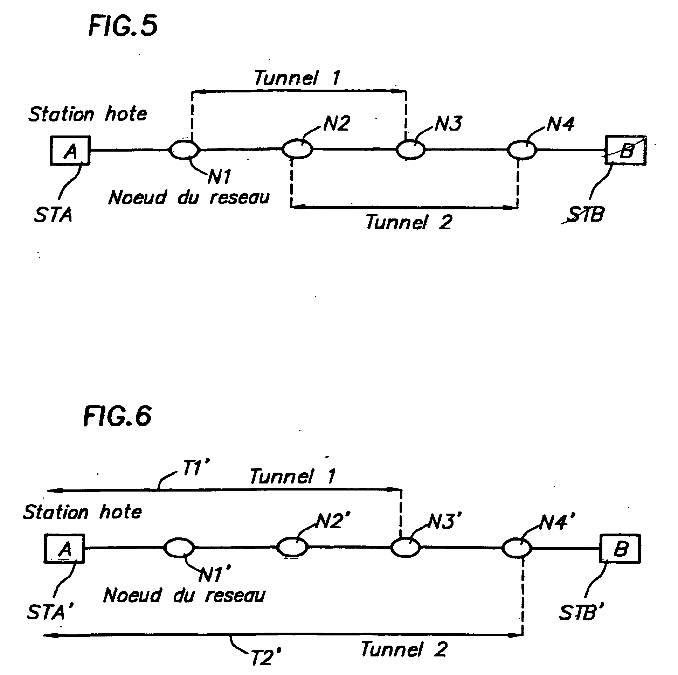

Les exemples illustrés sur les figures 5 et 6 montrent des tunnels établis, soit depuis une station hôte, soit au niveau de noeuds de réseau.

Dans l'exemple de la figure 5, le réseau reliant la station hôte STA à une station STB comprend quatre noeuds de réseau N₁ à N₄ et deux tunnels T₁, T₂. Le tunnel T₁ relie le noeud N₁ au noeud N₃ tandis que le tunnel T₂ relie le noeud N₂ au noeud N₄.

Dans l'exemple de la figure 6 qui montre un réseau STA', N'₁ à N'₄, STB' similaire au précédent, les tunnels T'₁ et T'₂ sont établis à partir de la station hôte STA'. Le tunnel T'₁ aboutit au noeud N'₃ tandis que le tunnel T'₂ aboutit au noeud N'₄.

## Revendications

1. Procédé permettant un fonctionnement simultané d'une pluralité de tunnels sur au moins un réseau comprenant au moins un noeud intermédiaire devant effectuer au moins un traitement correspondant à au moins une fonction, et dans lequel des données sont transmises par une station hôte sous forme de paquets répondant à un premier protocole et enfermés à l'intérieur de paquets créés sous au moins un deuxième protocole,
**caractérisé en ce que** ledit traitement est effectué sur le paquet original tel qu'il avait été émis par la station hôte source du paquet et non sur le paquet (ou ses fragments) reçu par le noeud après passage dans divers tunnels, et **en ce qu'**en conséquence il comprend au niveau du noeud intermédiaire, une séquence opératoire comportant :
- l'extraction de tous les en-têtes de tunnel du paquet original et si nécessaire le ré-assemblage du paquet original à partir de ses fragments, dans le cas où le paquet original a préalablement subi une fragmentation,
- l'exécution dudit traitement associé à ladite fonction sur le paquet original,
- la refragmentation éventuelle du paquet ayant subi les traitements et la remise en place des en-têtes des tunnels.

2. Procédé selon la revendication 1,
**caractérisé en ce que** le susdit noeud intermédiaire est une machine réseau logicielle et/ou matérielle.

3. Procédé selon l'une des revendications 1 et 2,
**caractérisé en ce qu'**il comprend, lors des susdites phases d'extraction et de ré-assemblage, une phase de stockage de contextes incluant des informations concernant les opérations subies par le paquet, et **en ce qu'**il utilise ces informations dans la phase de refragmentation et de remise en place des en-têtes de tunnels.

4. Procédé selon l'une des revendications précédentes,
**caractérisé en ce qu'**il est récursif et qu'il s'applique non seulement aux noeuds intermédiaires du réseau mais également à la station hôte, source du paquet.

5. Procédé selon l'une des revendications précédentes,
**caractérisé en ce que** les susdits traitements consistent en la réalisation de nouveaux tunnels et/ou en des opérations de différenciation de paquets en vue d'assurer une qualité de service.

6. Procédé selon l'une des revendications précédentes,
**caractérisé en ce qu'**il comprend un cycle opératoire comportant les étapes suivantes :
- une première étape d'analyse pour déterminer si le paquet reçu par le module réseau est un fragment ou non,
- une deuxième étape de détection pour déterminer dans le cas d'un paquet non fragmenté, si le paquet est un tunnel ou non,
- une troisième étape de traitement dans le cas où le paquet n'est pas un tunnel.

7. Procédé selon la revendication 6,
**caractérisé en ce que**, dans le cas où un fragment de paquet est détecté à la première étape, il comprend le stockage en mémoire du fragment ainsi que du contexte relatif à ce fragment, et **en ce que**, lorsqu'un dernier fragment est détecté, il comprend le ré-assemblage des fragments précédemment stockés pour obtenir un paquet qui est traité successivement dans les deuxième et troisième étapes.

8. Procédé selon la revendication 6,
**caractérisé en ce que**, dans le cas où un tunnel est détecté à la deuxième étape, il procède à la décapsulation de ce tunnel et effectue un stockage en mémoire du contexte relatif à ce tunnel, et **en ce que** le paquet obtenu après décapsulation est renvoyé à la première étape pour subir un nouveau cycle opératoire.

9. Procédé selon la revendication 6,
**caractérisé en ce qu'**il comprend une quatrième étape de détermination si le paquet d'origine sur lequel ont été appliqués les traitements doit être fragmenté ou non, cette détermination prenant en compte les contextes stockés en mémoire.

10. Procédé selon la revendication 9,
**caractérisé en ce qu'**il comprend une étape de détermination si le paquet qui ne doit pas être fragmenté doit être recapsulé ou non, **en ce que**, dans la négative, il émet le paquet sur le réseau, et **en ce que**, dans l'affirmative, il comprend une étape de recapsulation avant de déterminer si le paquet recapsulé doit être fragmenté ou non.

11. Procédé selon la revendication 9,
**caractérisé en ce que**, si le paquet doit être fragmenté, il procède à la fragmentation de ce paquet en tenant compte des contextes stockés aux étapes E₆, E₉ et détermine si les fragments de paquets doivent être recapsulés ou non, **en ce que**, dans la négative, il émet le paquet sur le réseau, et **en ce que**, dans l'affirmative, il comprend une étape de recapsulation avant de déterminer si le paquet recapsulé doit être fragmenté ou non.

## Patentansprüche

1. Verfahren zum gleichzeitigen Betrieb mehrerer Tunnel in mindestens einem Netzwerk mit mindestens einem Zwischenknoten, der mindestens eine Behandlung durchführen muss entsprechend mindestens einer Funktion, und bei dem Daten von einer Host-Station in Form von Paketen entsprechend einem ersten Protokoll übertragen werden und eingeschlossen in unter mindestens einem zweiten Protokoll generierten Paketen, **gekennzeichnet dadurch, dass** besagte Behandlung auf dem Originalpaket durchgeführt wird, so wie es von dem Quellhost des Paketes ausgegeben wurde, und nicht auf dem Paket (oder seinen Fragmenten), das von dem Knoten nach dem Durchgang durch verschiedene Tunnel erhalten wird, sowie **dadurch**, dass es daher auf Höhe des Zwischenknotens eine Funktionssequenz umfasst mit:
- der Extraktion von allen Tunnel-Kopfelementen aus dem Originalpaket und, wenn nötig, dem Wiederzusammenbau des Originalpaketes aus seinen Fragmenten, falls das Originalpaket vorher eine Fragmentierung erlitten hat,
- der Ausführung der genannten Behandlung verbunden mit besagter Funktion auf dem Originalpaket,
- der eventuellen Neufragmentierung des behandelten Paketes und der Rückführung der Tunnel-Kopfelemente an den Ursprungsort.

2. Verfahren nach Anspruch 1,
**gekennzeichnet dadurch, dass** der besagte Zwischenknoten eine Soft- und/oder Hardwarenetzmaschine ist.

3. Verfahren nach einem der Ansprüche 1 und 2,
**gekennzeichnet dadurch dass** es während der besagten Extraktions- und Wiederzusammenfügungsphasen eine Phase der Lagerung von Kontexten umfasst, die Informationen einschließen, die die an dem Paket vorgenommenen Operationen betreffen, sowie **dadurch** dass es diese Informationen in den Phasen Neufragmentierung und Rückführung der Tunnel-Kopfelemente an den Ursprungsort benutzt.

4. Verfahren nach einem der vorherigen Ansprüche,
**gekennzeichnet dadurch, dass** es rekursiv ist und sich nicht nur auf den Zwischenknoten des Netzes bezieht, sondern auch auf die Host-Station, die die Quelle des Paketes ist.

5. Verfahren nach einem der vorherigen Ansprüche,
**gekennzeichnet dadurch, dass** die besagten Behandlungen in der Herstellung von neuen Tunneln bestehen und/oder in Differenzierungen von Paketen, um die Qualität des Service zu sichern.

6. Verfahren nach einem der vorherigen Ansprüche,
**gekennzeichnet dadurch, dass** es einen Funktionszyklus mit folgenden Schritten umfasst:
- ein erster Analyseschritt, um zu bestimmen, ob das vom Netzmodul empfangene Paket ein Fragment ist oder nicht,
- ein zweiter Ermittlungsschritt, um bei einem nicht fragmentierten Paket zu bestimmen, ob das Paket ein Tunnel ist oder nicht,
- ein dritter Behandlungsschritt, falls das Paket kein Tunnel ist.

7. Verfahren nach Anspruch 6,
**gekennzeichnet dadurch dass**, falls ein Paketfragment beim ersten Schritt ermittelt wird, es die Speicherung des Fragments sowie des Kontexts dieses Fragments umfasst, und **dadurch** dass, wenn ein letztes Fragment ermittelt ist, es den Wiederzusammenbau der vorher gespeicherten Fragmente umfasst, um ein Paket zu erhalten, das anschließend in der zweiten und dritten Phase behandelt wird.

8. Verfahren nach Anspruch 6,
**gekennzeichnet dadurch dass**, falls ein Tunnel im zweiten Schritt ermittelt wird, es diesen Tunnel entkapselt und den Kontext dieses Tunnels speichert, sowie **dadurch**, dass das nach der Entkapselung erhaltene Paket zum ersten Schritt geführt wird, um einem neuen Funktionszyklus unterzogen zu werden.

9. Verfahren nach Anspruch 6,
**gekennzeichnet dadurch, dass** es einen vierten Schritt umfasst, um festzustellen, ob das behandelte Ursprungspaket fragmentiert werden muss oder nicht, unter Berücksichtigung der gespeicherten Kontexte.

10. Verfahren nach Anspruch 9,
**gekennzeichnet dadurch, dass** es einen Schritt umfasst, um festzustellen, ob das Paket, das nicht zerteilt werden muss, wieder eingekapselt werden muss oder nicht, **dadurch** dass, falls nicht, es das Paket ans Netz abgibt, und **dadurch** dass, wenn ja, es einen Wiedereinkapselungsschritt umfasst, bevor bestimmt wird, ob das wieder eingekapselte Paket fragmentiert werden muss oder nicht.

11. Verfahren nach Anspruch 9,
**gekennzeichnet dadurch dass**, wenn das Paket zerteilt werden muss, es dieses Paket unter Berücksichtigung der in den Phasen E_{6'} E₉ gespeicherten Kontexte fragmentiert und bestimmt, ob die Paketfragmente wieder eingekapselt werden müssen oder nicht, **dadurch** dass, falls nicht, es das Paket ans Netz abgibt, und **dadurch** dass, wenn ja, es einen Wiedereinkapselungsschritt umfasst, bevor bestimmt wird, ob das wieder eingekapselte Paket fragmentiert werden muss oder nicht.

## Claims

1. A method enabling a simultaneous operation of a plurality of tunnels in at least one network comprising at least one intermediate node having to carry out at least a processing corresponding to at least a function, and in which the data are transmitted by a host station in the form of packets obeying a first protocol and embedded within packets created under at least one second protocol,
**characterised in that** said processing is carried out on the original packet such as it had been emitted by the source host station of the packet and not on the packet (or its fragments) received by the node after in passage in various tunnels, and **in that** in consequence it comprises at the level of the intermediate node, an operating sequence comprising:
- extraction of the tunnel headers of tunnel of the original packet and if necessary, reassembly of the original packet from its fragments in the case of an original packet which has been subjected to fragmentation,
- execution of said processing associated with said function on the original packet,
- re-fragmentation, where appropriate, of the packet which has undergone processing and restoration of tunnel headers.

2. A method according to claim 1,
**characterised in that** the aforementioned intermediate node is a software and/or hardware network machine.

3. A method according to claims 1 and 2,
**characterised in that** it comprises, during the extraction and reassembly phases, a step for the storage of contexts, comprising information concerning the operations undergone by the packet, and **in that** it uses this information in the re-fragmentation phase and for restoration of the tunnel headers.

4. A method according to the previous claims,
**characterised in that** it is recursive, and that it applies not only to the intermediate nodes of the network but also to the host station, the source of the packet.

5. A method according to the previous claims,
**characterised in that** the aforementioned processing consists of the creation of new tunnels, and/or of operations concerning the differentiation of packets in order to ensure the quality of service.

6. A method according to the previous claims,
**characterised in that** it comprises an operational cycle which comprises the following steps:
- a first analysis step to determine whether or not the packet received by the network module is a fragment,
- a second detection step to determine whether or not the packet is a tunnel, in the case of an unfragmented packet.
- a third processing step in the event that the packet is not a tunnel.

7. A method according to claim 6,
**characterised in that**, in the event that a packet fragment is detected at the first step, it comprises the storage of the fragment in memory, as well as of the context relating to this fragment, and **in that**, when a last fragment is detected, it comprises reassembly of the previously stored fragments in order to obtain a packet which is successively processed in the second and third steps.

8. A method according to claim 6,
**characterised in that**, in the event that a tunnel is detected in the second step, it then proceeds to de-encapsulate this tunnel and to store in memory the context associated with this tunnel, and **in that** the packet obtained after de-encapsulation is then sent to the first step in order to undergo a fresh operational cycle.

9. A method according to claim 6,
**characterised in that** it comprises a fourth step for determination of whether or not the original packet to which the processing has been applied should be fragmented, where such determination takes account of the contexts stored in memory.

10. A method according to claim 9,
**characterised in that** it comprises a step for determining whether or not the packet which is not to be fragmented should be re-encapsulated, and **in that** if it is not to be re-encapsulated, it transmits the packet on the network, and if it is to be re-encapsulated, it comprises a re-encapsulation step before determining whether or not the re-encapsulated packet is to be fragmented.

11. A method according to claim 9,
**characterised in that** if the packet is to be fragmented, it then proceeds to fragment the packet, taking account of the contexts stored at steps E₆ and E₉, and determines whether or not the packets should be re-encapsulated, and **in that** if they are not to be re-encapsulated, it transmits the packets on the network, and if they are to be re-encapsulated, it comprises a re-encapsulation step before determining whether or not the re-encapsulated packet is to be fragmented.
